(19) Europäisches Patentamt
European Patent Office
Office européen des brevets

(11) Numéro de publication: **0 033 291**
**B1**

(12) **FASCICULE DE BREVET EUROPEEN**

(45) Date de publication du fascicule du brevet: **14.12.83**

(51) Int. Cl.³: **A 01 N 57/16,**
A 01 N 25/04, A 01 N 25/30

(21) Numéro de dépôt: **81420008.5**

(22) Date de dépôt: **27.01.81**

(54) **Suspensions aqueuses d'insecticide, leur préparation et leur utilisation.**

(30) Priorité: **29.01.80 FR 8002309**

(43) Date de publication de la demande:
**05.08.81 Bulletin 81/31**

(45) Mention de la délivrance du brevet:
**14.12.83 Bulletin 83/50**

(84) Etats contractants désignés:
**CH DE FR GB LI**

(56) Documents cités:
**FR - A - 2 206 049**
**GB - A - 1 005 372**
**US - A - 2 485 339**

(73) Titulaire: **RHONE-POULENC AGROCHIMIE**
**14-20, rue Pierre Baizet**
**F-69009 Lyon (FR)**

(72) Inventeur: **Bachelot, Jean-Claude**
**Domaine des Essarts No 8**
**F-69390 Vernaison (FR)**
Inventeur: **Croze, Ernest**
**22, rue des Glycines**
**F-69500 Bron (FR)**

(74) Mandataire: **Brachotte, Charles et al,**
**RHONE-POULENC AGROCHIMIE BP 9163-09**
**F-69263 Lyon Cedex 1 (FR)**

**EP 0 033 291 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Suspensions aqueuses d'insecticide, leur préparation et leur utilisation

La présente invention concerne des compositions insecticides, leur préparation et leur application. Elle a plus particulièrement trait à une formulation nouvelle et particulièrement intéressant de phosalone.

La phosalone est un insecticide connu depuis longtemps et dont la formule chimique est:

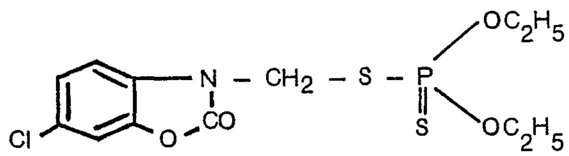

Dans le passé, la phosalone a été présentée (et elle est encore présentée actuellement) sous diverses formes et notamment sous forme de concentrés émulsionnables, de poudres mouillables ou encore sous forme de solutions dans une huile non miscible avec l'eau.

Ces diverses formulations présentent des inconvénients: les concentrés émulsion-nables et les solutions contiennent un ou plusieurs solvants et/ou huile organique. Il s'ensuit que les concentrés émulsionnables et les solutions de phosalone présentent un risque d'inflammabilité tant lors du stockage que lors du transport. De plus, les augmentations fréquentes et importantes du prix du pétrole et des produits en dérivant tendent à se répercuter parallèlement sur les formulations de la phosalone qui contiennent des solvants et/ou huile dérivant du pétrole.

Les poudres mouillables ont également divers inconvénients dont le principal est la dispersion de poussières dans l'atmosphère lors de la manipulation de ces poudres mouillables, soit lors de l'ensachage, soit lors de leur dilution à l'eau peu avant l'application sur les végétaux (autrement dit, lors de la préparation de la bouillie). La présence de ces poussières dans l'atmosphère a pour conséquence que la manipulation des poudres mouillables est considérée comme une opération désagréable, voire même dangereuse.

Il y a donc le besoin d'une formulation de la phosalone qui ne présente pas les inconvénients des formulations connues.

La présente invention a pour but de répondre à ce besoin en fournissant une formulation de la phosalone qui soit à la fois commode à utiliser, non dangereuse et économique. D'autres avantages de l'invention apparaîtront au cours de la description qui va suivre.

Il a maintenant été trouvé, et c'est ce qui fait l'objet de la présente invention, des compositions insecticides caractérisées en ce qu'elles sont constituées d'une suspension aqueuse de phosalone comprenant un épaississant ainsi qu'un adjuvant tensioactif tel que:

a—100 cm3 d'une émulsion aqueuse contenant 50 g de phosalone et 5 g de l'adjuvant ayant été agités, puis laissés au repos pendant 30 mn à 50°C, cette émulsion ne donne pas lieu à séparation d'une phase huileuse d'un volume supérieur à 20 cm3 et,

b—100 cm3 d'une suspension aqueuse, contenant 50 g de phosalone en particules solides de diamètre compris entre 1 et 10 $\mu$ et 5 g d'adjuvant tensioactif, étant laissés 30 mn au repos à 20°C, et un volume de 9/10ème étant prelevé sans agitation à la partie supérieure, le 1/10ème restant présente un extrait sec inférieur à 12% en poids de l'extrait sec initial de la totalité de la suspension.

La phosalone se trouve généralement dans les compositions selon l'invention à raison de 50 à 550 g/l, de préférence à raison de 200 à 500 g/l; ces dernières valeurs concernent tout spécialement les compositions destinées au stockage et à la commercialisation.

Dans les compositions selon l'invention, la phosalone se trouve sous forme de particules solides, dont 95% (pourcentage en nombre) ont un diamètre inférieur à 20$\mu$, de préférence compris entre 0,05 et 10$\mu$. Le diamètre considéré dans la présente invention est un diamètre apparent tel qu'on peut le mesurer par exemple par observation microscopique de la plus grande dimension de la particule.

Dans ces suspensions aqueuses, la phosalone peut être associée avec d'autres matières actives connues comme étant associables avec la phosalone, notamment le lindane et le DDT (ou dichlorodiphényltrichloréthane).

Les épaississants utilisés dans l'invention sont des produits tels que, ajoutés à de l'eau ou à des solutions ou suspensions aqueuses de pesticides, ils confèrent à ces dernières des propriétés de pseudoplasticité.

Les épaississants utilisables dans l'invention peuvent être de nature minérale ou organique.

Comme épaississants de type minéral, on peut citer les attapulgites, les bentonites, les laponites et les silices colloïdales.

Comme épaississants de type organique, on peut citer les alginates et surtout les biopolymères hydrophiles de type hétéropolysaccharidique, ces biopolymères étant les épaississants préférés selon l'invention.

La quantité d'épaississant dans les compositions selon l'invention est généralement comprise entre 0,01 et 15% en poids, et avantageusement, elle est comprise entre 0,05 et 10% en poids; dans le cas où l'épaississant est un biopolymère hydrophile hétéropolysaccharidique, la quantité d'épaississant est généralement comprise entre 0,01 et 2% en poids, de préférence comprise entre 0,05 et 0,5% en poids.

Les biopolymères hydrophiles de type hétéropolysaccharidiques utilisables dans l'invention sont des produits connus. Ils ont un poids moléculaire supérieur à 200 000 et de préférence supérieur à 1 000 000; ils ont des propriétés de pseudoplasticité et sont généralement obtenus par action (c'est-à-dire par fermentation) de bactéries du genre Xanthomonas sur des hydrates de carbone. Ces biopolymères sont aussi quelquefois désignés par d'autres expressions assez diverses telles que: colloïdes hydrophiles de Xanthomonas; gommes hétéropolysaccharidiques gommes xanthanes; hétéropolysaccharides extracellulaires provenant de Xanthomonas ou de bactéries de la famille des pseudomonacées. Le mot biopolymère est utilisé dans le sens qu'il s'agit de polymères issus d'un procédé biologique (fermentation bactérienne en l'occurence).

Les bactéries utilisées pour la préparation de ces biopolymères sont le plus souvent Xanthomonas campestris mais on peut aussi utiliser d'autres Xanthomonas telles que Xanthomonas carotae, Xanthomonas incanae, Xanthomonas begoniae, Xanthomonas malvacearum, Xanthomonas vesicatoria, Xanthomonas translucens, Xanthomonas vasculorum. Des hydrates de carbones appropriés pour la fermentation à l'aide de bactéries Xanthomonas sont le glucose, le sucrose, le fructose, le maltose, le lactose, le galactose, l'amidon, le fécule de pomme de terre etc...

Selon le test a) définissant l'adjuvant tensioactif des compositions selon l'invention, 50 g de phosalone fondue et 5 g d'adjuvant tensioactif sont ajoutés à une quantité d'eau à 50°C suffisante pour que le volume du mélange soit égal à 100 cm3; on agite de manière à obtenir une émulsion homogène et on laisse séjourner pendant 30 mn à 50°C dans une éprouvette graduée; la quantité de couche huileuse s'étant éventuellement séparée (et ayant constitué donc une phase liquide distincte) doit être alors inférieure à 20 cm3.

Selon le test b) définissant l'adjuvant tensioactif des compositions selon l'invention, on laisse reposer à 20°C pendant 30 mn dans une éprouvette graduée, 100 cm3 d'une suspension aqueuse contenant 50 g de phasalone en particules solides de diamètre compris entre 1 et 10$\mu$ et 5 g d'adjuvant tensioactif; après repos, on prélève, sans agitation, un volume de 9/10e (neuf dixièmes) de la suspension situé à la partie supérieure de la suspension et l'on mesure l'extrait sec (résidu après évaporation de l'eau) du dixième restant; cet extrait sec ne doit pas dépasser 12% en poids de l'extrait sec de 100 $cm^3$ de la suspension sur laquelle on fait le test.

Les propriétés qui viennent d'être définies ci-avant sont les propriétés appréciées globalement pour les constituants tensioactifs des compositions selon l'invention, étant entendu que l'adjuvant tensioactif renfermé dans ces compositions peut être un produit unique ou un mélange de produits; en conséquence, les propriétés définies ci-dessus pour l'adjuvant tensioactif sont soit celles d'un produit tensioactif unique, soit celles d'un mélange de produits tensioactifs.

Les adjuvants tensioactifs convenant pour l'invention sont généralement et en outre solubles dans l'eau et dans une phase organique telle que la phosalone fondue.

Comme adjuvant tensioactif répondant à la définition donnée ci-avant et, par conséquent, utilisable dans l'invention, on peut citer les esters phosphoriques de tristyrylphénol polyéthoxylé sous forme salifiée, de préférence par une amine.

Les compositions selon l'invention contiennent généralement entre 20 et 120 g/l d'adjuvant tensioactif, de préférence entre 40 et 80 g/l.

La préparation des compositions selon l'invention peut être effectuée par tout moyen connu en soi pour mélanger les divers constituants. Toutefois, un procédé préféré est décrit ci-après et fait partie de l'invention.

Selon ce procédé, on mélange sous agitation, la phosalone, l'eau et le ou les adjuvants tensioactifs à une température supérieure ou égale au point de fusion de la phosalone (cette première étape s'opère en phase liquide), puis on refroidit et broie simultanément l'émulsino chaude obtenue dans la première étape du procédé et qui devient une suspension par le fait même du refroidissement (la phosalone cristallise ou tout au moins se solidifie au cours de ce refroidissement), puis l'on ajoute l'épaississant à la suspension aqueuse obtenue au cours de la seconde étape du procédé.

Au cours de la première étape du procédé de l'invention, on mélange sous agitation la phosalone, l'eau et l'adjuvant tensioactif; de manière préférentielle on verse la phosalone fondue dans une solution chaude agitée de l'adjuvant tensioactif dans l'eau.

La température à laquelle on opère cette première étape est supérieure au point de fusion de la phosalone et inférieure à 100°C. Une température supérieure de 1°C au point de fusion de la phosalone, et inférieure à 60°C est préférée. Le point de fusion de la phosalone est de 48°C pour la phosalone pure; il peut être plus bas et même atteindre 42°C avec de la phosalone technique ou impure.

Après l'étape première de mélange à chaud sous agitation et en phase liquide, le mélange ainsi obtenu est refroidi tout en étant broyé. Ce broyage permet d'obtenir une suspension bien homogène de particules finement divisées; le refroidissement est effectué en dessous du point de fusion de la

phosalone et de préférence jusqu'à température inférieure à 35°C (et supérieure au point de congélation du mélange). Au cours de ce refroidissement, les fines gouttelettes liquides de phosalone se solidifient et généralement cristallisent. Pour effectuer ce broyage, ou peut utiliser tout moyen connu en soi, notamment les broyeurs à billes.

Pour refroidir tout en broyant, on utilise avantageusement des broyeurs munis de système de refroidissement par exemple du type à circulation de liquide en double enveloppe.

Les compositions selon l'invention s'appliquent sur les végétaux pour effectuer les traitements pesticides et notamment insecticides dans lesquels la phosalone est connue comme étant efficace. Le plus souvent, on utilise des compositions concentrées en pesticide pour le stockage et le transport, et on dilue ces compositions au moment de l'emploi. Les compositions diluées, telles qu'on les applique sur les végétaux, sont appelées bouillies, et sont généralement obtenues par dilution des compositions selon l'invention dans 50 à 300 litres d'eau.

La manipulation des compositions selon l'invention ne donne naissance à aucune poussière; ces compositions ne présentent aucun risque d'inflammabilité et évitent de faire appel à des solvants dérivés du pétrole. La phosalone appliquée par le moyen des compositions selon l'invention résiste bien au lavage par la pluie.

Les exemples suivants, donnés à titre non limitatif, illustrent l'invention et montrent comment elle peut être mise en oeuvre.

Exemple 1

Dans une cuve maintenue à 52°C on charge:
—575 $cm^3$ d'eau chaude,
—50 g d'éthylène glycol (antigel)
—50 g d'agent tensioactif anionique (mélange de mono et diester phosphorique de tristyrylphénol porteur d'une chaîne polyoxyéthylénique à environ 18 motifs récurrents oxyéthylène, et neutralisé à l'aide de triéthanolamine; produit commercialisé sous l'appelation Soprophor FL).

Cet adjuvant tensioactif répond aux caractéristiques physiques définies plus haut d'une manière générale pour l'invention.

Dans le test d'appréciation des propriétés émulsifiantes, le volume de la couche huileuse s'étant séparé est de 9 $cm^3$.

Dans le test d'appréciation des propriétés dispersantes, l'extrait sec du volume inférieur (un dixième de la totalité) était de 10,3% en poids de l'extrait sec du volume total.

Le mélange est agité fortement en on ajoute 500 g de phosalone fondue.

On obtient ainsi une émulsion de phosalone fondue dans l'eau chaude.

Cette émulsion est ensuite broyée dans un broyeur à billes à double enveloppe permettant un refroidissement rapide.

A la sortie de ce broyeur, le mélange à 25°C contient des particules de phosalone dont le diamètre est compris entre 0,5 et 10$\mu$ (90% des particules ont un diamètre compris entre 2 et 5 $\mu$).

On ajoute alors 1,5 g de biopolymère de type hétéropolysaccharidique issu de la fermentation de Xanthomonas campestris sur des hydrates de carbone (produit commercialisé sous l'appellation Rhodopol XB 23).

On obtient ainsi un litre d'une suspension aqueuse stable.
— pendant une durée de 3 mois à 20°C, on n'observe aucune décantation ni modification de l'aspect physique de la suspension aqueuse,
—on a maintenu la suspension pendant 3 mois à 35°C; aucune dégradation chimique notable n'a été observée à la fin de cette période. Ce résultat est d'autant plus remarquable que l'art antérieur dissuadait pratiquement d'utiliser et même d'essayer une formulation aqueuse pour la phosalone en raison de sa sensibilité à l'eau: disparition de plus de 90% en moins de 10 jours selon Mekh. Deistviya Gerbits. Sint. Regul. Rosta Rast. Ikh Sud'ba Biosfere, Mater. Mezhdunar Simp. Stran-Chlenov SEV, 10th, 1975, *2* p. 96—98, cité par Chem. Abstr. *88* 165462.

Exemples 2 à 4

Ces exemples illustrent les résultats obtenus par traitement de végétaux à l'aide de bouillies (suspension aqueuse telle qu'utilisée lors de son application sur les végétaux) obtenues par dilution de la suspension décrite à l'exemple 1 à l'aide d'une quantité d'eau suffisante pour obtenir la concentration en phosalone indiquée ci-après.

On a aussi effectué des comparaisons avec des traitements similaires mais réalisés à l'aide de bouillies obtenues par dilution à l'eau à partir de concentré émulsionnable de phosalone (c'est-à-dire de solution de phosalone et d'émulsifiant dans un solvant organique constitué essentiellement de xylène; comme émulsifiant on a utilisé un mélange d'alkylphénol polyéthoxylé et d'alkylarylsulfonate de Ca).

Exemple 2

On a traité des rosiers en vue d'apprécier la sélectivité des compositions selon l'invention vis-à-vis de ces végétaux. Les rosiers étaient de la variété "Madame Meillant" avec 6 ans d'âge. Ils ont été traités avec les bouillies contenant 60 ou 120 g de phosalone par hectolitre.

On a noté l'effet sur les rosiers par le pourcentage de jaunissement des feuilles.

Pour une bouillie à 60 g/hl de phosalone, on a obtenu les résultats suivants, T étant la date de traitement.

| | | Pourcentage de jaunissement des feuilles | | |
|---|---|---|---|---|
| | | T + 2 jours | T + 7 jours | T + 14 jours |
| bouillie obtenue à partir de | composition selon l'invention | 15 | 10 | 6 |
| | concentré émulsionnable | 36 | 23 | 19 |

Pour une bouillie à 120 g/hl de phosalone, on a obtenu les résultats suivants, T étant la date de traitement:

| | | Pourcentage de jaunissement des feuilles | | |
|---|---|---|---|---|
| | | T + 2 jours | T + 7 jours | T + 14 jours |
| bouillie obtenue à partir de | composition selon l'invention | 29 | 21 | 19 |
| | concentré émulsionnable | 51 | 44 | 40 |

Les compositions selon l'invention permettent d'améliorer la sélectivité.

Exemple 3

On a traité des plants de pomme de terre (variété "Bintje") âgés de 2 mois et infestés par des pucerons verts (Myzus persicae, Macrosiphum euphorbiae, Aphis nasturtii) à l'aide de bouillies contenant 60 g/hl de phosalone et utilisées à raison de 1 500 l/ha. Ces bouillies étaient obtenues par dilution à l'eau à partir de phosalone, celle-ci étant soit sous forme de composition selon l'invention, soit (pour le témoin) sous forme de concentré émulsionnable.

On a mesuré l'efficacité par le nombre de pucerons détruits par rapport aux témoins non traités, T étant la date de traitement.

| | | Efficacité | |
|---|---|---|---|
| | | T + 2 jours | T + 7 jours |
| Bouillie obtenue à partir de | composition selon l'invention | 85 | 87 |
| | concentré émulsionnable | 92 | 65 |

Les compositions selon l'invention permettent d'améliorer la persistance.

Exemple 4

On reproduit l'exemple 3 mais avec des plants infestés de Doryphore (Leptinotarsa decemlineata).

T est la date de traitement. Au 13ème jour, on a recontaminé les plantes avec de nouveaux doryphores.

| | | Efficacité | | |
|---|---|---|---|---|
| | | T + 1 jours | T + 8 jours | T + 16 jours |
| Bouillie obtenue à partir de | composition selon l'invention | 98 | 96 | 90 |
| | concentré émulsionnable | 98 | 93 | 86 |

Les compositions selon l'invention conduisent à une persistance améliorée.

On obtient des résultats semblables à ceux indiqués dans les exemples ci-dessus en utilisant des compositions selon l'exemple 1 contenant ou bien 45 g d'agent tensioactif (au lieu de 50 g) et 580 $cm^3$ d'eau (au lieu de 575 $cm^3$) ou bien 70 g d'agent tensioactif (au lieu de 50 g) et 555 $cm^3$ d'eau (au lieu de 575 $cm^3$).

**Revendications**

1. Compositions insecticides à base de phosalone, caractérisées en ce qu'elles sont constituées d'une suspension aqueuse de phosalone contenant un épaississant ainsi qu'un adjuvant tensioactif tel que:

a—100 cm3 d'une émulsion aqueuse contenant 50 g de phosalone et 5 g de l'adjuvant ayant été agités, puis laissés au repos pendant 30 mn à 50°C, cette émulsion ne donne pas lieu à séparation d'une phase huileuse d'un volume supérieur à 20 cm3 et,

b—100 cm3 d'une suspension aqueuse, contenant 50 g de phosalone en particules solides de diamètre compris entre 1 et 10 $\mu$ et 5 g d'adjuvant tensioactif, étant laissés 30 mn au repos à 20°C, et un volume de 9/10ème étant prélevé sans agitation à la partie supérieure, le 1/10ème restant présente un extrait sec inférieur à 12% en poids de l'extrait sec initial de la totalité de la suspension.

2. Compositions selon la revendication 1, caractérisées en ce que l'épaississant est une attapulgite ou une bentonite ou une laponite ou une silice colloïdale ou un alginate.

3. Compositions selon la revendication 1, caractérisées en ce que l'épaississant est un biopolymère hydrophile de type hétéropolysaccharidique.

4. Compositions selon la revendication 3, caractérisées en ce que la biopolymère est issue d'une fermentation bactérienne mettant en oeuvre des bactéries du genre Xanthomonas.

5. Compositions selon les revendications 1 à 4, caractérisées en ce qu'elles contiennent de 50 à 550 g/l de phosalone.

6. Compositions selon la revendication 5, caractérisées en ce qu'elles contiennent de 200 à 500 g/l de phosalone.

7. Compositions selon l'une des revendications 1 à 6, caractérisées en ce qu'elles contiennent 0,01 à 15% en poids d'épaississant.

8. Compositions selon la revendication 6, caractérisées en ce qu'elles contiennent 0,01 à 2% en poids de biopolymère.

9. Compositions selon la revendication 8, caractérisées en ce qu'elles contiennent entre 0,05 et 0,5% en poids de biopolymère.

10. Compositions selon l'une des revendications 1 à 9, caractérisées en ce que la phosalone est sous forme de particules solides dont 95% en nombre ont un diamètre inférieur à 20$\mu$.

11. Compositions selon la revendication 10, caractérisées en ce que 95% des particules solides de phosalone ont un diamètre compris entre 0,05 et 10$\mu$.

12. Composition selon l'une des revendication 1 à 11, caractérisée en ce que l'adjuvant est un ester phosphorique de tristyrylphénol polyéthoxylé éventuellement sous forme salifiée.

13. Procédé de préparation de compositions selon l'une des revendications 1 à 12, caractérisé en ce qu'on mélange sous agitation la phosalone, l'eau et le ou les adjuvants tensioactifs à une température supérieure ou égale au point de fusion de la phosalone puis que l'on broie et refroidit simultanément l'emulsion chaude obtenue au cours de la première étape puis que l'on ajoute l'épaississant.

14. Procédé de traitement des végétaux, caractérisé en ce qu'on applique une suspension constituée de ou obtenue à partir d'une composition selon l'une des revendications 1 à 12.

**Patentansprüche**

1. Insektizide Zusammensetzungen auf der Basis von Phosalon, gekennzeichnet dadurch, daß sie aus einer wässrigen Suspension von Phosalon bestehen, die ein Dickungsmittel und einen grenzflächenaktiven Zusatz enthält und daß dieser grenzflächenaktive Zusatz folgenden Bedingungen entspricht:

a) aus 100 ml einer wässrigen Emulsion, die 50 g Phosalon und 5 g Zusatz enthält, trennen sich nach Rühren und Ruhenlassen bei 50°C während 30 Minuten nicht mehr als 20 ml einer öligen Phase ab,

b) wenn aus 100 ml einer wässrigen Suspension, die 50 g Phosalon als Feststoffteilchen mit Durchmesser 1 bis 10 $\mu$m sowie 5 g grenzflächenaktiven Zusatz enthält, nach 30 Minuten Ruhenlassen bei 20°C ohne Rühren die oberen 9/10 des Volumens entfernt werden, macht der Feststoffgehalt des verbliebenen 1/10 Volumens weniger als 12 Gew.-% des ursprünglichen Feststoffgehalts der gesamten Suspension aus.

2. Zusammensetzungen nach Anspruch 1, gekennzeichnet dadurch, daß das Dickungsmittel ein Attapulgit, oder ein Bentonit, oder ein Laponit, oder eine kolloidale Kieselsäure oder ein Alginat ist.

3. Zusammensetzungen nach Anspruch 1, gekennzeichnet dadurch, daß das Dickungsmittel ein hydrophiles heteropolysaccharidartiges Biopolymer ist.

4. Zusammensetzungen nach Anspruch 3, gekennzeichnet dadurch, daß das Biopolymer durch bakterielle Fermentation in Gegenwart von Xanthomonas-Bakterien erhalten worden ist.

5. Zusammensetzungen nach einem der Ansprüche 1 bis 4, gekennzeichnet dadurch, daß sie 50 bis 550 g/l Phosalon enthalten.

6. Zusammensetzungen nach Anspruch 5, gekennzeichnet dadurch, daß sie 200 bis 500 g/l Phosalon enthalten.

7. Zusammensetzungen nach einem der Ansprüche 1 bis 6, gekennzeichnet dadurch, daß sie 0,01 bis 15 Gew.-% Dickungsmittel enthalten.

8. Zusammensetzungen nach Anspruch 6, gekennzeichnet dadurch, daß sie 0,01 bis 2 Gew.-% Biopolymer enthalten.

9. Zusammensetzungen nach Anspruch 8, gekennzeichnet dadurch, daß sie 0,05 bis 0,5 Gew.-% Biopolymer enthalten.

10. Zusammensetzungen nach einem der Ansprüche 1 bis 9, gekennzeichnet dadurch, daß das Phosalon in Forme von Feststoffteilchen vorliegt, von denen 95%, bezogen auf die Gesamtzahl, einen Durchmesser unter 20 $\mu$m aufweisen.

11. Zusammensetzungen nach Anspruch 10, gekennzeichnet dadurch, daß 95% der festen Phosalonteilchen einen Durchmesser von 0,05 bis 10 $\mu$m aufweisen.

12. Zusammensetzungen nach einem der Ansprüche 1 bis 11, gekennzeichnet dadurch, daß der grenzflächenaktiven Zusatz ein Phosphorsäureester von polyäthoxyliertem Tristyrylphenol, möglicherweise in Salzform, ist.

13. Verfahren zur Herstellung der Zusammensetzungen nach einem der Ansprüche 1 bis 12, gekennzeichnet dadurch, daß man unter Rühren Phosalon, Wasser und den grenzflächenaktiven Zusatz bzw. die grenzflächenaktiven Zusätze bei einer Temperatur vermischt, die mindestens gleich ist dem Schmelzpunkt des Phosalons, oder darüber liegt, darauf die in der ersten Stufe erhaltene heiße Emulsion fein zerteilt und gleichzeitig abkühlt und dann das Dickungsmittel zugibt.

14. Verfahren zum Behandeln von Pflanzen, gekennzeichnet dadurch, daß man eine Suspension, bestehend aus oder erhalten ausgehend von einer Zusammensetzung nach einem der Ansprüche 1 bis 12 aufbringt.

**Claims**

1. Insecticidal compositions based on phosalone, characterised in that they consist of an aqueous suspension of phosalone, containing a thickener and a surface-active adjuvant wherein the surface-active adjuvant is such that:

a) when 100 cc of an aqueous emulsion containing 50 g of phosalone and 5 g of the adjuvant have been agitated and then left to stand for 30 minutes at 50°C, this emulsion does not give rise to the separation of an oily phase having a volume of more than 20 cc, and

b) when 100 cc of an aqueous suspension containing 50 g of phosalone, in the form of solid particles having a diameter of between 1 and 10$\mu$ and 5 g of surface-active adjuvant have been left to stand for 30 minutes at 20°C, and 9/10ths of the volume has been removed, without agitation, from the upper part, the remaining 1/10th has a solids content which is less than 12% by weight of the initial solids content of the total suspension.

2. Compositions according to claim 1, characterised in that the thickener is an attapulgite, a bentonite, a laponite, a colloidal silica or an alginate.

3. Compositions according to claim 1, characterised in that the thicknener is a hydrophilic biopolymer of the heteropolysaccharide type.

4. Compositions according to claim 3, characterised in that the biopolymer is produced by bacterial fermentation using bacteria of the xanthomonas species.

5. Compositions according to claims 1 to 4, characterised in that they contain from 50 to 550 g/litre of phosalone.

6. Compositions according to claim 5, characterised in that they contain from 200 to 500 g/litre of phosalone.

7. Compositions according to claims 1 to 6, characterised in that they contain 0.01 to 15% by weight of thickener.

8. Compositions according to claim 6, characterised in that they contain 0.01 to 2% by weight of biopolymer.

9. Compositions according to claim 8, characterised in that they contain between 0.05 and 0.5% by weight of biopolymer.

10. Compositions according to one of claims 1 to 9, characterised in that the phosalone is in the form of solid particles of which 95% by number have a diameter of less than 20$\mu$.

11. Compositions according to claim 10, wherein characterised in that 95% of the solid phosalone particles have a diameter of between 0.05 and 10$\mu$.

12. Compositions according to one of claims 1 to 11, characterised in that the surface-active adjuvant is a phosphate of polyoxyethyleneated tristyryl phenol, eventually in the salified form.

13. A process for the preparation of a composition according to one of claims 1 to 12, characterised in that the phosalone, the water and the surface-active adjuvant or adjuvants, are mixed with agitation, at a temperature which is greater than or equal to the melting point of the phosalone, and then the hot emulsion obtained during the first step is simultaneously grinded and cooled, and then a thickener is added.

14. A process for the treatment of plants, characterized in that a suspension consisting of, or obtained from a composition according to one of Claims 1 to 12 is applied.